# EUROPÄISCHE PATENTSCHRIFT

(11) **EP 2 534 740 B1**
(45) Veröffentlichungstag und Bekanntmachung des Hinweises auf die Patenterteilung: **14.05.2014**
(21) Anmeldenummer: 11703868.7
(22) Anmeldetag: 10.02.2011
(51) Int. Cl.: H02G 1/00

(54) **VORRICHTUNG ZUM DURCHTRENNEN EINES ELEKTRISCHEN LEITERS IN EINER STROMSCHIENE**
DEVICE FOR CUTTING AN ELECTRIC CONDUCTOR IN A BUSBAR
DISPOSITIF POUR SECTIONNER UN CONDUCTEUR ÉLECTRIQUE DANS UNE BARRE CONDUCTRICE

(30) Priorität: 12.02.2010 DE 202010002287 U
(43) Veröffentlichungstag der Anmeldung: 19.12.2012
(73) Patentinhaber: Zumtobel Lighting GmbH, 32657 Lemgo (DE)
(72) Erfinder: DÜNSCHEDE, Elmar, 33100 Paderborn (DE)
(74) Vertreter: Thun, Clemens
(86) Internationale Anmeldenummer: PCT/EP2011/051967
(87) Internationale Veröffentlichungsnummer: WO 2011/098523

(56) Entgegenhaltungen:
- WO-A1-2005/102627
- DE-A1- 3 606 834
- US-A- 4 387 746
- US-A1- 2002 083 593

## Beschreibung

Die Erfindung betrifft eine Vorrichtung zum Durchtrennen eines elektrischen Leiters in einer Stromschiene mit den im Oberbegriff des Anspruchs 1 genannten Merkmalen.

Stromschienen sind längliche Halteelemente, in denen üblicherweise mehrere elektrische Leiter angeordnet sind. Stromschienen werden in der Regel an einer Decke oder an einer Wand befestigt. Beispielsweise werden sie als Teile von Leuchten verwendet, wobei Lichtquellen an den Stromschienen befestigt und elektrisch mit den in der Stromschiene befindlichen Leitern kontaktiert werden.

Beispielsweise werden Stromschienen aus Stahlblech gefertigt, in der Regel in bestimmten Längen. Falls eine Stromschiene abweichender Länge gewünscht ist, wird oftmals einfach eine entsprechend längere Stromschiene durch Absägen auf das gewünschte Maß gekürzt. Hierbei stellt sich das Problem, dass die in der Stromschiene befindlichen Leiter ebenfalls entsprechend gekürzt werden müssen. Hierzu wird gemäß dem Stand der Technik eine Zange verwendet. Die Handhabung ist dabei besonders schwierig und zeitintensiv. Außerdem besteht die Gefahr, dass unsaubere Trennstellen an den so gekürzten Leitern entstehen.

Aus der DE 36 06 834 A1 ist ein Kabelschneidegerät mit einem Handrad und einem Messer zum Durchtrennen eines Kabels bekannt. Das Kabel wird zum Schneiden auf einer Platte angeordnet und anschließend mithilfe des Handrads durch Klemmbacken in seiner Lage fixiert.

Der Erfindung liegt die Aufgabe zugrunde, eine Vorrichtung anzugeben, mit der das Kürzen eines elektrischen Leiters in einer Stromschiene besser möglich ist.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angebeben. Gemäß der Erfindung ist eine Vorrichtung zum Durchtrennen eines elektrischen Leiters in einer Stromschiene vorgesehen, die ein Betätigungselement zum Betätigen der Vorrichtung aufweist, ein Schneideelement zum Durchtrennen des Leiters, sowie eine Bewegungsübertragungseinrichtung zur Übertragung einer durch eine Betätigung des Betätigungselements ausgelösten Bewegung des Betätigungselements auf eine Bewegung einer Schneide des Schneideelements, durch die der Leiter durchtrennt wird. Weiterhin weist die Vorrichtung eine erste plane Anlagefläche zum Anlegen der Vorrichtung gegen ein Stirnende der Stromschiene auf, wobei mit Bezug auf die erste plane Anlagefläche das Betätigungselement auf einer Seite und die Schneide des Schneideelements auf der gegenüberliegenden Seite angeordnet sind. Die Vorrichtung kann auch als Werkzeug bezeichnet werden.

Dadurch dass das Betätigungselement mit Bezug auf die Anlagefläche gegenüberliegend zu der Schneide des Schneideelements angeordnet ist, ist die Handhabung der Vorrichtung bei der Betätigung vereinfacht. Durch die Anlagefläche wird eine besonders präzise relative Positionierung zwischen der Stromschiene einerseits und der Schneide des Schneideelements andererseits ermöglicht. Auf diese Weise können leichter präziser ausgeführte Trennstellen der gekürzten Leiter erzielt werden.

Vorteilhaft weist die Vorrichtung weiterhin eine zweite plane Anlagefläche zum Anlegen der Vorrichtung an der Stromschiene auf, wobei die erste plane Anlagefläche und die zweite plane Anlagefläche derart orientiert angeordnet sind, dass sie einen Winkel kleiner als 180° einschließen. Vorzugsweise schließen sie einen Winkel von 90° ein. Hierdurch lässt sich die Vorrichtung gegenüber der Stromschiene noch leichter besonders genau ausrichten.

Weiterhin vorteilhaft weist die Vorrichtung außerdem eine dritte plane Anlagefläche zum Anlegen der Vorrichtung an der Stromschiene auf, wobei die dritte plane Anlagefläche derart orientiert angeordnet ist, dass sie sowohl mit der ersten planen Anlagefläche, als auch mit der zweiten planen Anlagefläche jeweils einen Winkel kleiner als 180° einschließt. Vorzugsweise schließt die dritte plane Anlagefläche sowohl mit der ersten planen Anlagefläche, als auch mit der zweiten planen Anlagefläche jeweils einen Winkel von 90° ein. Hierdurch lässt sich die Handhabung zur möglichst präzisen Ausrichtung der Vorrichtung gegenüber der Stromschiene nochmals erleichtern.

Die Bewegungsübertragungseinrichtung umfasst vorteilhaft ein Gewindestangenelement, durch das eine Drehbewegung des Betätigungselements in eine Längsbewegung der Schneide des Schneideelements umgewandelt werden kann. Weiterhin vorteilhaft umfasst sie auch ein Kraftübertragungselement zur Kraftübertragung von dem Gewindestangenelement auf das Schneideelement, wobei das Kraftübertragungselement ein Innengewinde aufweist, das mit dem Gewinde des Gewindestangenelements zusammenwirkt. Auf diese Weise lässt sich eine kraftsparende und effiziente Handhabung der Vorrichtung beim Durchtrennen des Leiters erzielen. Außerdem ist es vorteilhaft, wenn das Kraftübertragungselement eine gegenüber der Längsachse des Gewindestangenelements geneigt orientierte Fläche aufweist, auf der das Schneideelement bei einer Drehung des Gewindestangenelements gleitet.

Vorteilhaft ist das Schneideelement derart gelagert, dass es in eine erste Position bewegt werden kann, in der die Schneide des Schneideelements von der ersten planen Anlagefläche einen Abstand aufweist. Hierdurch lässt sich erzielen, dass der Leiter besonders gut an einer Stelle durchtrennt werden kann, die mit Bezug auf das betreffende stirnseitige Ende der Stromschiene in das Innere der Stromschiene versetzt ist. Dies ist vorteilhaft im Hinblick auf die Einhaltung von Luft- und Kriechstrecken.

Weiterhin vorteilhaft ist dabei das Schneideelement derart gelagert, dass es in eine zweite Position bewegt werden kann, in der die Schneide des Schneideelements zumindest im Wesentlichen in derselben Ebene liegt wie die erste plane Anlagefläche. Auf diese Weise lässt sich erzielen, dass nach dem Durchtrennen des Leiters das abgetrennte Ende stirnseitig aus der Stromschiene heraus befördert werden kann. Mit "im Wesentlichen" sei damit bezeichnet, dass sich die Schneide im Rahmen der konstruktionsbedingten Genauigkeit auf bzw. in der durch die erste plane Anlagefläche festgelegten Ebene befindet.

Hierzu weist das Kraftübertragungselement vorteilhaft weiterhin eine Schulterfläche zur Bewegung des Schneideelements in die zweite Position auf.

Vorteilhaft weist die Vorrichtung außerdem wenigstens ein weiteres Schneideelement zum Durchtrennen eines weiteren elektrischen Leiters in der Stromschiene auf, wobei die Bewegungsübertragungseinrichtung derart ausgebildet ist, dass durch die Betätigung des Betätigungselements eine Schneide des weiteren Schneideelements den weiteren elektrischen Leiter durchtrennt. Dies ermöglicht eine besonders effektive Handhabung, da üblicherweise mehrere elektrische Leiter in einer Stromschiene angeordnet sind.

Oft sind die Leiter in einer U-förmigen Stromschiene an gegenüberliegenden inneren Seitenflächen, also innen an den beiden "U-Schenkeln" angeordnet. Hierfür ist es besonders vorteilhaft, wenn die Vorrichtung derart ausgebildet ist, dass sich bei der Betätigung des Betätigungselements die Schneide des ersten Schneideelements und die Schneide des weiteren Schneideelements in unterschiedliche Richtungen bewegen. Weiterhin vorteilhaft sind hierbei das Schneideelement und das weitere Schneideelement durch ein Federelement miteinander verbunden. Durch ein solches Federelement können nach erfolgtem Durchtrennen der Leiter die Schneideelemente "automatisch" wieder in die Ausgangsstellung zurückbewegt werden, so dass sie unmittelbar für einen folgenden Schneide- bzw. Durchtrenn-Vorgang bereit sind.

Die Erfindung wird im Folgenden anhand eines Ausführungsbeispiels und mit Bezug auf die Zeichnungen näher erläutert. Es zeigen:
- Fig. 1: eine Querschnittskizze eines Ausführungsbeispiels einer erfindungsgemäßen Vorrichtung,
- Fig. 2: eine entsprechende Ansicht von unten,
- Fig. 3: eine perspektivische Querschnittskizze,
- Fig. 4: eine der Fig. 1 entsprechende Skizze, in der sich die Vorrichtung in einer Ausgangsstellung befindet und
- Fig. 5: eine der Fig. 1 entsprechende Skizze, in der sich die Vorrichtung in einer Zwischenstellung befindet.

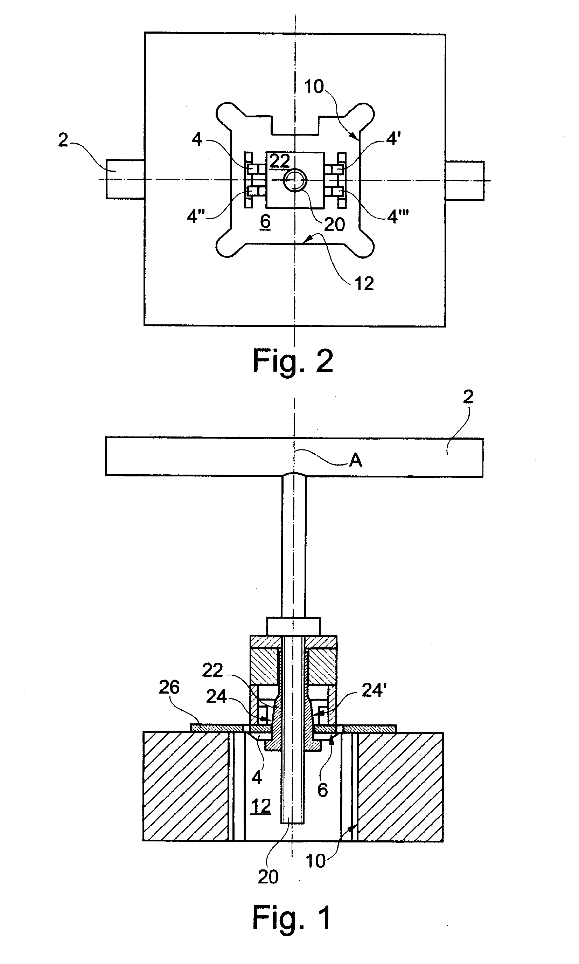

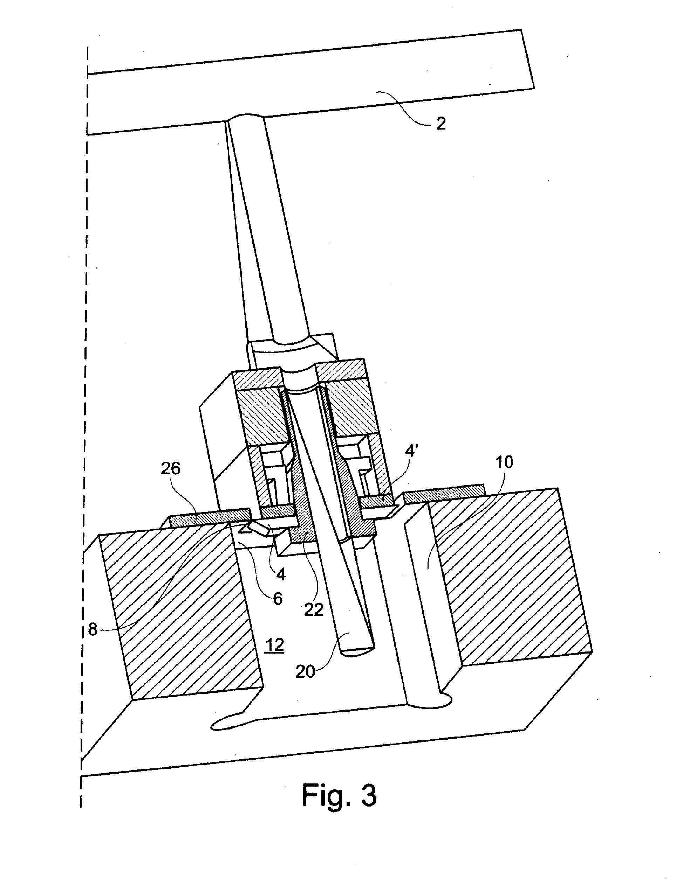

Fig. 1 zeigt eine Querschnittskizze eines Ausführungsbeispiels einer erfindungsgemäßen Vorrichtung, Fig. 2 eine entsprechende Ansicht von unten und Fig. 3 eine perspektivische Querschnittskizze. Die Vorrichtung dient zum Durchtrennen eines elektrischen Leiters in einer Stromschiene. Stromschienen weisen typischerweise einen meist U-förmigen Querschnitt auf, wobei mehrere elektrische Leiter der Länge nach im Inneren der Stromschiene verlaufend an einer oder an mehreren inneren Seitenflächen verlegt sind.

Ein Durchtrennen eines in der Stromschiene befindlichen Leiters ist regelmäßig insbesondere nach einem manuellen Kürzen einer Stromschiene gefordert. Ein derartiges Kürzen ist mithilfe einer Zange möglich, jedoch in der Handhabung kompliziert und es besteht bei dieser Methode eine vergleichsweise große Wahrscheinlichkeit dafür, dass die Qualität der Trennstelle keinen hohen Anforderungen entspricht.

Die hier vorgestellte Vorrichtung ermöglicht ein verbessertes Durchtrennen der Leiterenden. Die Vorrichtung weist ein Betätigungselement 2 auf, das zur Betätigung der Vorrichtung dient. Weiterhin weist die Vorrichtung ein Schneideelement 4 zum Durchtrennen des Leiters auf, sowie eine Bewegungsübertragungseinrichtung zur Übertragung einer, durch eine Betätigung des Betätigungselements 2 ausgelösten, Bewegung des Betätigungselements 2 auf eine Bewegung einer Schneide 8 des Schneideelements 4, durch die der Leiter durchtrennt wird. Bei der Bewegung des Betätigungselements 2 kann es sich um eine Drehbewegung handeln, beispielsweise um eine Achse A. Das Betätigungselement 2 kann hierzu einen Griff zur manuellen Bedienung aufweisen, der sich quer zu der Achse A erstreckt.

Weiterhin weist die Vorrichtung eine erste plane Anlagefläche 6 auf, die zum Anlegen der Vorrichtung an die Stromschiene dient. Beispielsweise kann die erste plane Anlagefläche 6 dazu vorgesehen sein, plan gegen dasjenige Stirnende der Stromschiene angelegt zu werden, in dessen Bereich sich die zur Durchtrennung des Leiters vorgesehene Stelle befindet. Durch ein solches Anlegen lässt sich die Vorrichtung besonders gut gegenüber der Stromschiene positionieren.

Wie aus den Figuren 1 und 3 hervorgeht, ist mit Bezug auf die erste plane Anlagefläche 6 das Betätigungselement 2 der Schneide 8 des Schneideelements 4 gegenüberliegend angeordnet. Mit Bezug auf die Zeichnungen ist das Betätigungselement 2 oberhalb der ersten planen Anlagefläche 6 angeordnet und die Schneide 8 unterhalb. Auf diese Weise lässt sich die Schneide 8 gut in den betreffenden inneren Bereich der Stromschiene einbringen, in gewünschter Weise positionieren und in der so eingenommenen Stellung dann das Betätigungselement 2 betätigen. Dies ermöglicht eine besonders einfache Handhabung.

Vorteilhaft weist die Vorrichtung weiterhin eine zweite plane Anlagefläche 10 auf, die mit der ersten planen Anlagefläche 6 einen Winkel kleiner als 180° einschließt, vorzugsweise - wie in den Figuren dargestellt - einen Winkel von 90°. Diese zweite plane Anlagefläche 10 kann beispielswiese dazu dienen, gegen einen seitlichen Außenflächenbereich der Stromschiene angelegt zu werden, der an das genannte Stirnende angrenzt. Auf diese Weise wird eine präzise Ausrichtung der Vorrichtung gegenüber der Stromschiene noch weiter vereinfacht. Analog kann auch eine dritte Anlagefläche 12 vorgesehen sein. Wie beim Ausführungsbeispiel gezeigt, können also die drei genannten Anlageflächen 6, 10, 12 jeweils 90° zueinander geneigt angeordnet sein, so dass die gegen den betreffenden Stirnendenbereich der Stromschiene angelegt werden können. Auf diese Weise lässt sich praktisch ausschließen, dass die Stellung der Vorrichtung gegenüber der Stromschiene bei der Handhabung ungewollt verändert wird.

Wie beim Ausführungsbeispiel der Fall, können entsprechend weiterentwickelt auch insgesamt fünf Anlageflächen vorgesehen sein, so dass die entsprechenden Außenflächenbereiche der Stromschiene mit den Anlageflächen "zwei" bis "fünf" flächig kontaktierend umfasst werden und die erste Anlagefläche gegen die Stirnseite gedrückt wird. Auf diese Weise ist die Handhabung noch weitergehend vereinfacht.

Die Bewegungsübertragungseinrichtung kann insbesondere ein Gewindestangenelement 20 aufweisen, durch das eine Drehbewegung des Betätigungselements 2 in eine Längsbewegung der Schneide 8 des Schneideelements 4 umgewandelt werden kann, welche diejenige Bewegung darstellt, durch die der Leiter durchtrennt wird. Wie im gezeigten Ausführungsbeispiel der Fall, kann vorgesehen sein, dass das Betätigungselement 2 direkt, beispielsweise einstückig mit dem Gewindestangenelement 20 verbunden ist, und zur Betätigung des Betätigungselements 2 eine Drehbewegung um die Achse A vorgesehen ist, die mit der Längsachse A des Gewindestangenelements 20 identisch ist. Eine derartige Handhabung erinnert vom Bewegungsablauf her an die Handhabung eines Korkenziehers und ist leicht in der Ausführung.

Das Gewindestangenelement 20 kann derart gelagert sein, dass seine Längsachse A normal bezüglich der ersten planen Anlagefläche 6 verläuft.

Weiterhin kann die Bewegungsübertragungseinrichtung ein Kraftübertragungselement 22 aufweisen, das zur Kraftübertragung von dem Gewindestangenelement 20 auf das Schneideelement 4 dient. Dazu kann das Kraftübertragungselement 22 ein Innengewinde aufweisen, das mit einem Außengewinde des Gewindestangenelements 20 zusammenwirkt. Dabei kann die Bewegungsübertragungseinrichtung derart ausgebildet sein, dass durch eine Drehung des Gewindestangenelements 20 in einer ersten Richtung das Kraftübertragungselement 22 der ersten planen Fläche 6 angenähert wird und durch eine Drehung in der entgegengesetzten Richtung von der ersten planen Fläche 6 fortbewegt wird.

Das Kraftübertragungselement 22 kann außerdem eine gegenüber der Längsachse A des Gewindestangenelements 20 geneigt orientierte Fläche 24 aufweisen, auf der das Schneideelement 4 bei einer Drehung des Gewindestangenelements 20 gleitet, so dass diese Fläche eine Schubschräge bildet. Die Fläche 24 kann derart geneigt sein, dass ihr Abstand von der Achse A mit zunehmendem Abstand von der ersten planen Fläche 6 zunimmt. Die geneigte Fläche 24 kann plan geformt sein.

Das Schneideelement 4 kann an einer Deckplatte 26 der Vorrichtung gelagert sein; dabei kann die erste plane Anlagefläche 6 durch eine Außenfläche der Deckplatte 26 gebildet sein. Mit Bezug auf die Zeichnungen stellt die nach unten weisende Außenfläche der Deckplatte 26 die erste plane Anlagefläche 6 dar.

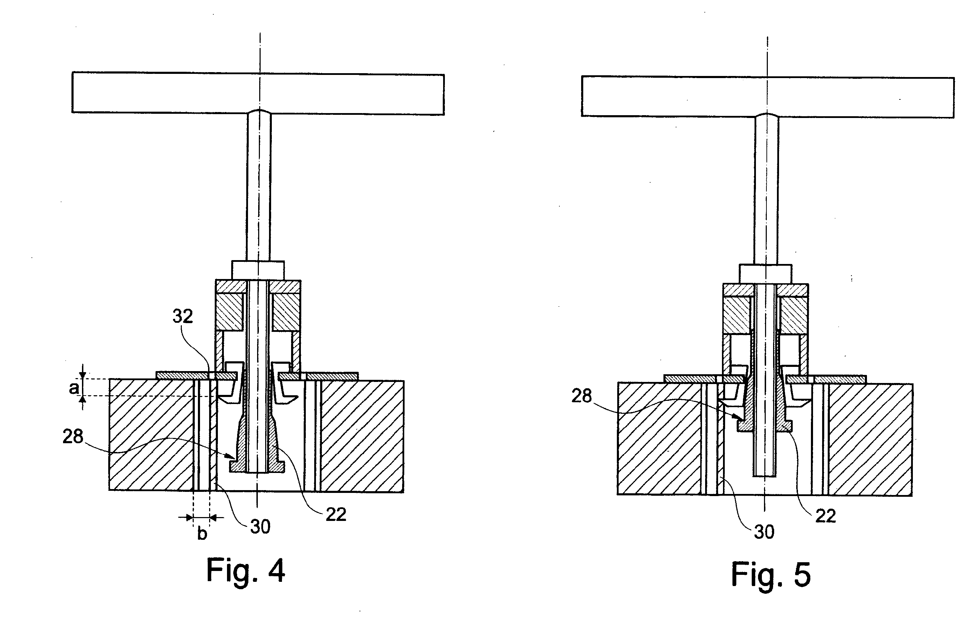

Wie aus Fig. 4 hervorgeht, kann das Schneideelement 4 derart gelagert sein, dass es in eine erste Position bewegt werden kann, in der die Schneide 8 des Schneideelements 4 von der ersten planen Anlagefläche 6 einen Abstand *a* aufweist; beispielsweise kann vorgesehen sein, dass ausgehend von der in Fig. 1 dargestellten Situation bzw. Stellung das Schneideelement 4 dadurch in die erste Position bewegt wird, dass die Lage des Kraftübertragungselements 22 gegenüber dem Gewindestangenelement 20 verändert wird, also beispielsweise wie oben dargestellt durch Drehen des Gewindestangenelements 20. In Fig. 4 befindet sich das Kraftübertragungselement 22 weiter "unten" als in Fig. 1. Zu dieser Lageveränderung kann das Kraftübertragungselement 22 gegenüber einem Mit-Drehen mit dem Gewindestangenelement 20 durch ein (nicht dargestelltes) Sicherungselement gesichert sein, beispielsweise durch ein Führungselement, das an der Deckplatte 26 angeordnet ist und das in eine in dem Kraftübertragungselement 22 angeordnete Nut eingreift.

Beispielsweise kann das Schneideelement 4 insgesamt C-förmig gestaltet sein und dadurch gelagert sein, dass es eine Öffnung in der Deckplatte 26 durchgreift, so dass die beiden Endbereiche des "C's" mit Bezug auf die Deckplatte 26 gegenüberliegend angeordnet sind, wobei die Schneide 8 an einem der beiden Endbereiche des "C's" angeordnet ist. Durch die genannte Lageveränderung des Kraftüberragungselements 22 bezüglich der ersten planen Anlagefläche 6 kommt dann das Schneideelement 4 - ausgehend von der in Fig. 1 dargestellten Stellung - frei und kann sich in die in Fig. 4 dargestellte erste Position bewegen. Dabei kann vorgesehen sein, dass die Vorrichtung gegenüber der Schwerkraft wie in den Figuren dargestellt orientiert gehalten wird, so dass das Schneideelement 4 durch die Schwerkraft in die erste Position bewegt wird. Alternativ kann auch ein entsprechend wirkendes (nicht dargestelltes Federelement) vorgesehen sein, das das Schneideelement 4 dementsprechend auch in dem Fall in die erste Position drückt, in dem die Vorrichtung in anderer Orientierung gegenüber der Schwerkraft gehalten wird.

Die in den Figuren 1 und 3 gezeigte Position des Schneideelements 4 wird im Folgenden als "zweite" Position bezeichnet. In dieser liegt die Schneide 8 des Schneideelements 4 praktisch in einer Ebene mit der planen Anlagefläche 6.

Dadurch, dass das Schneideelement 4 in die erste Position bewegt werden kann, ist ermöglicht, dass der Leiter an einer Stelle durchtrennt wird, die mit Bezug auf das betreffende stirnseitige Ende der Stromschiene nach innen versetzt ist. Dies ist vorteilhaft mit Bezug auf die Einhaltung von Luft- und Kriechstrecken.

Anhand der Fig. 4 möge dies näher verdeutlicht sein. Schematisch dargestellt ist dort der Leiter 30 - allerdings ohne die entsprechende Stromschiene; zu der nächstliegenden Innenwand der Vorrichtung weist der Leiter 30 einen Abstand b auf, der der entsprechenden Wandstärke der Stromschiene entsprechen kann, so dass also der Leiter 30 mit Bezug auf Fig. 4 nach links an einem inneren Wandbereich der Stromschiene anliegt. Wird nun ausgehend von der ersten Position, die sozusagen eine "Ausgangsstellung" darstellt, das Kraftübertragungselement 22 durch Drehen des Gewindestangenelements 20 bzw. durch Drehen des Betätigungselements 2 in Richtung auf die erste plane Anlagefläche 6 zu bewegt, mit Bezug auf die Figuren also nach "oben", klemmt sich die Scheide 8 gegen den Leiter 30 und wird im Verlaufe der weiteren Bewegung des Kraftübertragungselements 22 durch die geneigte Fläche 24 bzw. Schubschräge noch weiter von der Achse A weggedrückt, so dass der Leiter 30 von der Schneide 8 durchtrennt wird. In Fig. 5 ist eine Zwischenstellung dargestellt, in der die Schneide 8 den Leiter 30 durchtrennt hat. Der Leiter 30 wird auf diese Weise also in dem Abstand *a* von dem stirnseitigen Ende der Stromschiene durchtrennt.

Vorteilhaft weist das Kraftübertragungselement 22 weiterhin eine Schulterfläche 28 auf, die zur Bewegung des Schneideelements 4 in die zweite Position dient, insbesondere ausgehend von der oben genannten Zwischenstellung. Wie ein Vergleich der Figuren 5 und 1 deutlich macht, wird durch eine Aufwärtsbewegung des Kraftübertragungselements 22 ausgehend von der in Fig. 5 dargestellten Situation durch die Schulterfläche 28 das Schneideelement 4 nach oben bewegt, bis es sich in der zweiten Position befindet. Nach einem erfolgten Durchtrennen des Leiters 30 kann hierdurch erzielt werden, dass das abgetrennte Endstück des Leiters 30 nach außen ausgeworfen wird, wie durch den Pfeil in Fig. 5 angedeutet. Hierfür kann in der Deckplatte 26 eine Auswurföffnung 32 vorgesehen sein. Die Handhabung ist hierdurch weiterhin erleichtert, da ein manuelles Entfernen der abgetrennten Leiterenden nicht mehr erforderlich ist.

Die Vorrichtung kann außerdem ein weiteres Schneideelement 4' zum Durchtrennen eines weiteren elektrischen Leiters in der Stromschiene aufweisen, das analog zu dem zuerst genannten Schneideelement 4 gestaltet ist. Die Bewegungsübertragungseinrichtung kann in diesem Fall vorteilhaft derart ausgebildet sein, dass durch die Betätigung des Betätigungselements 2 eine Schneide des weiteren Schneideelements 4' den weiteren elektrischen Leiter durchtrennt. Dementsprechend kann das Kraftübertragungselement 22 beispielsweise eine weitere geneigte Fläche 24' aufweisen, die entsprechend mit dem weiteren Schneideelement 4' zusammenwirkt.

Die Vorrichtung kann dabei weiterhin derart ausgebildet sein, dass sich bei der Betätigung des Betätigungselements 2 die Schneide 8 der ersten Schneideelements 4 und die Schneide des weiteren Schneideelements 4' in unterschiedliche Richtungen bewegen. Beispielsweise kann das weitere Schneideelement 4' zum zuerst genannten Schneideelement 4 spiegelsymmetrisch aufgebaut sein und dementsprechend in die entgegengesetzte Richtung wirkend gestaltet sein. Die Bewegungsübertragungseinrichtung ist in diesem Fall vorzugsweise entsprechend spiegelsymmetrisch ausgebildet.

Die Effektivität der Vorrichtung wird hierdurch erhöht, da in nur einem Arbeitsvorgang zwei Leiter durchtrennt werden können.

Dementsprechend weiterentwickelt können auch - wie in Fig. 2 angedeutet - noch mehr Schneideelemente, beispielsweise noch zwei weitere Schneideelemente 4", 4"' vorgesehen sein, so dass insgesamt beispielsweise vier Schneideelemente vorgesehen sind. Von diesen können zwei in eine Richtung und die weiteren zwei in die gegenüberliegende Richtung wirken.

Um sicherzustellen, dass nach einem Durchtrennen des Leiters 30 bzw. der Leiter das Schneideelement 4 bzw. die Schneideelemente 4, 4', 4", 4"' wieder in ihre erste Position verbracht werden können, kann ein (nicht dargestelltes) Federelement vorgesehen sein.

## Patentansprüche

1. Vorrichtung zum Durchtrennen eines elektrischen Leiters in einer Stromschiene, aufweisend
- ein Betätigungselement (2) zum Betätigen der Vorrichtung,
- ein Schneideelement (4) zum Durchtrennen des Leiters (30),
- eine Bewegungsübertragungseinrichtung zur Übertragung einer durch eine Betätigung des Betätigungselements (2) ausgelösten Bewegung des Betätigungselements (2) auf eine Bewegung einer Schneide (8) des Schneideelements (4), durch die der Leiter (30) durchtrennt wird,
**gekennzeichnet durch**
- eine erste plane Anlagefläche (6) zum Anlegen der Vorrichtung gegen ein Stirnende der Stromschiene,
wobei mit Bezug auf die erste plane Anlagefläche (6) das Betätigungselement (2) auf einer Seite und die Schneide (8) des Schneideelements (4) auf der gegenüberliegenden Seite angeordnet sind.

2. Vorrichtung nach Anspruch 1,
weiterhin aufweisend
- eine zweite plane Anlagefläche (10) zum Anlegen der Vorrichtung an der Stromschiene, wobei die erste plane Anlagefläche (6) und die zweite plane Anlagefläche (10) derart orientiert angeordnet sind, dass sie einen Winkel kleiner als 180° einschließen.

3. Vorrichtung nach Anspruch 2,
bei der die erste plane Anlagefläche (6) und die zweite plane Anlagefläche (10) derart orientiert angeordnet sind, dass sie einen Winkel von 90° einschließen.

4. Vorrichtung nach Anspruch 2 oder 3,
weiterhin aufweisend
- eine dritte plane Anlagefläche (12) zum Anlegen der Vorrichtung an der Stromschiene, wobei die dritte plane Anlagefläche (12) derart orientiert angeordnet ist, dass sie sowohl mit der ersten planen Anlagefläche (6), als auch mit der zweiten planen Anlagefläche (10) jeweils einen Winkel kleiner als 180° einschließt.

5. Vorrichtung nach Anspruch 4,
bei der die dritte plane Anlagefläche (12) sowohl mit der ersten planen Anlagefläche (6), als auch mit der zweiten planen Anlagefläche (10) jeweils einen Winkel von 90° einschließt.

6. Vorrichtung nach einem der vorhergehenden Ansprüche,
bei der die Bewegungsübertragungseinrichtung ein Gewindestangenelement (20) umfasst, durch das eine Drehbewegung des Betätigungselements (2) in eine Längsbewegung der Schneide (8) des Schneideelements (4) umgewandelt werden kann.

7. Vorrichtung nach Anspruch 6,
bei der die Bewegungsübertragungseinrichtung weiterhin ein Kraftübertragungselement (22) zur Kraftübertragung von dem Gewindestangenelement (20) auf das Schneideelement (4) aufweist, wobei das Kraftübertragungselement (22) ein Innengewinde aufweist, das mit dem Gewinde des Gewindestangenelements (22) zusammenwirkt.

8. Vorrichtung nach Anspruch 7,
bei der das Kraftübertragungselement (22) eine gegenüber der Längsachse (A) des Gewindestangenelements (20) geneigt orientierte Fläche (24) aufweist, auf der das Schneideelement (4) bei einer Drehung des Gewindestangenelements (20) gleitet.

9. Vorrichtung nach einem der vorhergehenden Ansprüche,
bei der das Schneideelement (4) derart gelagert ist, dass es in eine erste Position bewegt werden kann, in der die Schneide (8) des Schneideelements (4) von der ersten planen Anlagefläche (6) einen Abstand (*a*) aufweist.

10. Vorrichtung nach Anspruch 9,
bei der das Schneideelement (4) weiterhin derart gelagert ist, dass es in eine zweite Position bewegt werden kann, in der die Schneide (8) des Schneideelements (4) zumindest im Wesentlichen in derselben Ebene liegt wie die erste plane Anlagefläche (6).

11. Vorrichtung mit den in den Ansprüchen 7 und 10 genannten Merkmalen, bei der das Kraftübertragungselement (22) weiterhin eine Schulterfläche (28) zur Bewegung des Schneideelements (4) in die zweite Position aufweist.

12. Vorrichtung nach einem der vorhergehenden Ansprüche,
weiterhin aufweisend
- wenigstens ein weiteres Schneideelement (4') zum Durchtrennen eines weiteren elektrischen Leiters in der Stromschiene,
wobei die Bewegungsübertragungseinrichtung derart ausgebildet ist, dass durch die Betätigung des Betätigungselements (2) eine Schneide des weiteren Schneideelements (4') den weiteren elektrischen Leiter durchtrennt.

13. Vorrichtung nach Anspruch 12,
die derart ausgebildet ist, dass sich bei der Betätigung des Betätigungselements (2) die Schneide (8) des ersten Schneideelements (4) und die Schneide des weiteren Schneideelements (4') in unterschiedliche Richtungen bewegen.

14. Vorrichtung nach Anspruch 12 oder 13,
bei der das Schneideelement (4) und das weitere Schneideelement (4') durch ein Federelement miteinander verbunden sind.

## Claims

1. A device for cutting through an electrical conductor in a busbar, having
- an actuating element (2) for actuating the device,
- a cutting element (4) for cutting through the conductor (30),
- a movement-transfer mechanism for transferring a movement of the actuating element (2), triggered by an actuation of the actuating element (2), to a movement of a cutting edge (8) of the cutting element (4), by means of which the conductor (30) is cut through,
**characterised by**
- a first planar contact surface (6) for placement of the device against a front end of the busbar,
wherein, with reference to the first planar contact surface (6), the actuating element (2) is arranged on one side and the cutting edge (8) of the cutting element (4) is arranged on the opposite side.

2. A device according to claim 1,
having, furthermore,
- a second planar contact surface (10) for placement of the device against the busbar, wherein the first planar contact surface (6) and the second planar contact surface (10) are arranged so as to be oriented in such a way that they enclose an angle that is smaller than 180°.

3. A device according to claim 2,
in which the first planar contact surface (6) and the second planar contact surface (10) are arranged so as to be oriented in such a way that they enclose an angle of 90°.

4. A device according to claim 2 or 3,
having, furthermore,
- a third planar contact surface (12) for placement of the device against the busbar, wherein the third planar contact surface (12) is arranged so as to be oriented in such a way that it encloses an angle that is smaller than 180° both with the first planar contact surface (6) and with the second planar contact surface (10), respectively.

5. A device according to claim 4,
in which the third planar contact surface (12) encloses an angle of 90° both with the first planar contact surface (6) and with the second planar contact surface (10), respectively.

6. A device according to one of the preceding claims,
in which the movement-transfer mechanism comprises a threaded-rod element (20) by means of which a rotational movement of the actuating element (2) can be converted into a longitudinal movement of the cutting edge (8) of the cutting element (4).

7. A device according to claim 6,
in which the movement-transfer mechanism has, furthermore, a force-transfer element (22) for the transfer of force from the threaded-rod element (20) to the cutting element (4), wherein the force-transfer element (22) has an internal thread that cooperates with the thread of the threaded-rod element (22).

8. A device according to claim 7,
in which the force-transfer element (22) has a surface (24) that is oriented so as to be inclined with respect to the longitudinal axis (A) of the threaded-rod element (20) and on which the cutting element (4) slides in the event of a rotation of the threaded-rod element (20).

9. A device according to one of the preceding claims,
in which the cutting element (4) is mounted in such a way that it can be moved into a first position in which the cutting edge (8) of the cutting element (4) is at a distance (*a*) from the first planar contact surface (6).

10. A device according to claim 9,
in which the cutting element (4) is mounted, furthermore, in such a way that it can be moved into a second position in which the cutting edge (8) of the cutting element (4) lies at least substantially in the same plane as the first planar contact surface (6).

11. A device having the features mentioned in claims 7 and 10, in which the force-transfer element (22) has, furthermore, a shoulder surface (28) for movement of the cutting element (4) into the second position.

12. A device according to one of the preceding claims,
having, furthermore,
- at least one further cutting element (4') for cutting through a further electrical conductor in the busbar,
wherein the movement-transfer mechanism is formed in such a way that as a result of the actuation of the actuating element (2) a cutting edge of the further cutting element (4') cuts through the further electrical conductor.

13. A device according to claim 12,
which is formed in such a way that in the case of the actuation of the actuating element (2) the cutting edge (8) of the first cutting element (4) and the cutting edge of the further cutting element (4') move in different directions.

14. A device according to claim 12 or 13,
in which the cutting element (4) and the further cutting element (4') are connected together by means of a spring element.

## Revendications

1. Dispositif servant à sectionner un conducteur électrique dans une barre conductrice, présentant
- un élément d'actionnement (2) servant à actionner le dispositif,
- un élément à lame (4) servant à sectionner le conducteur (30),
- un système de transmission de mouvement servant à transférer un mouvement, déclenché par l'actionnement de l'élément d'actionnement (2), de l'élément d'actionnement (2) sur un mouvement d'une lame (8) de l'élément à lame (4), lequel permet de sectionner le conducteur (30),
**caractérisé par**
- une première surface d'appui (6) plane destinée à appuyer le dispositif contre une extrémité frontale de la barre conductrice,
sachant que l'élément d'actionnement (2) et la lame (8) de l'élément à lame (4) sont disposés respectivement sur un côté et sur le côté opposé par rapport à la première surface d'appui (6) plane.

2. Dispositif selon la revendication 1,
présentant en outre
- une deuxième surface d'appui plane (10) destinée à appuyer le dispositif au niveau de la barre conductrice, sachant que la première surface d'appui plane (6) et la deuxième surface d'appui plane (10) sont disposées de manière orientée de telle manière qu'elles forment un angle inférieur à 180°.

3. Dispositif selon la revendication 2,
dans le cadre duquel la première surface d'appui plane (6) et la deuxième surface d'appui plane (10) sont disposées de manière orientée de telle manière qu'elles forment un angle de 90°.

4. Dispositif selon la revendication 2 ou 3,
présentant en outre
- une troisième surface d'appui plane (12) destinée à appuyer le dispositif au niveau de la barre conductrice, sachant que la troisième surface d'appui plane (12) est disposée de manière orientée de telle manière qu'elle forme, aussi bien avec la première surface d'appui plane (6) qu'avec la deuxième surface d'appui plane (10), respectivement un angle inférieur à 180°.

5. Dispositif selon la revendication 4,
dans le cadre duquel la troisième surface d'appui plane (12) forme aussi bien avec la première surface d'appui plane (6) qu'avec la deuxième surface d'appui plane (10) respectivement un angle de 90°.

6. Dispositif selon l'une quelconque des revendications précédentes,
dans le cadre duquel le système de transmission de mouvement comprend un élément à tige filetée (20), lequel permet de transformer le mouvement de rotation de l'élément d'actionnement (2) en un mouvement longitudinal de la lame (8) de l'élément à lame (4).

7. Dispositif selon la revendication 6,
dans le cadre duquel le système de transmission de mouvement présente en outre un élément de transmission de force (22) servant à transmettre la force de l'élément à tige filetée (20) sur l'élément à lame (4), sachant que l'élément de transmission de force (22) présente un filetage intérieur, qui coopère avec le filetage de l'élément à tige filetée (22).

8. Dispositif selon la revendication 7,
dans le cadre duquel l'élément de transmission de force (22) présente une face (24) orientée de manière inclinée par rapport à l'axe longitudinal (A) de l'élément à tige filetée (20), sur laquelle l'élément à lame (4) glisse lors d'une rotation de l'élément à tige filetée (20).

9. Dispositif selon l'une quelconque des revendications précédentes,
dans le cadre duquel l'élément à lame (4) est logé de telle manière qu'il peut être déplacé dans une première position, dans laquelle la lame (8) de l'élément à lame (4) présente un écart (a) de la première surface d'appui plane (6).

10. Dispositif selon la revendication 9,
dans le cadre duquel l'élément à lame (4) est logé de telle manière en outre qu'il peut être déplacé dans une deuxième position, dans laquelle la lame (8) de l'élément à lame (4) se trouve au moins essentiellement dans le même plan que la première face d'appui plane (6).

11. Dispositif présentant les caractéristiques évoquées dans les revendications 7 et 10, dans le cadre duquel l'élément de transmission de force (22) présente en outre une face d'épaulement (28) servant à déplacer l'élément à lame (4) dans la deuxième position.

12. Dispositif selon l'une quelconque des revendications précédentes, présentant en outre,
- au moins un autre élément à lame (4') servant à sectionner un autre conducteur électrique dans la barre conductrice,
sachant que le système de transmission de mouvement est réalisé de telle manière que grâce à l'actionnement de l'élément d'actionnement (2), une lame de l'autre élément à lame (4') sectionne l'autre conducteur électrique.

13. Dispositif selon la revendication 12,
qui est réalisé de telle manière que la lame (8) du premier élément à lame (4) et la lame de l'autre élément à lame (4') se déplacent dans diverses directions lors de l'actionnement de l'élément d'actionnement (2).

14. Dispositif selon la revendication 12 ou 13,
dans le cadre duquel l'élément à lame (4) et l'autre élément à lame (4') sont reliés l'un à l'autre par un élément formant ressort.
